# EUROPEAN PATENT SPECIFICATION

(11) **EP 1 351 438 B1**
(45) Date of publication and mention of the grant of the patent: **20.07.2005**
(21) Application number: 03005599.0
(22) Date of filing: 12.03.2003
(51) Int. Cl.: H04L 12/18, H04L 12/46

(54) **IP multicast replication process and apparatus therefore**
Replikationsprozess für IP-Mehrfachsendung und Vorrichtung hierfür
Procédé de réplication pour la transmission à destinations multiples des paquets IP et dispositif correspondant

(30) Priority: 15.03.2002 US 364049 P; 20.09.2002 US 247298
(43) Date of publication of application: 08.10.2003
(73) Proprietor: Broadcom Corporation, Irvine, California 92618-7013 (US)
(72) Inventor: Shankar, Laxman, San Jose, California 95135 (US)
(74) Representative: Jehle, Volker Armin, Dipl.-Ing.

(56) References cited:
- WO-A-01/41364
- US-A- 6 128 654
- US-A- 6 147 995
- US-A1- 2002 009 083

## Description

### REFERENCE TO RELATED APPLICATIONS:

This application claims priority of United States Provisional Patent Application Serial No. 60/364,049, filed on March 15, 2002.

### BACKGROUND OF THE INVENTION

### FIELD OF INVENTION

The present invention relates to network devices, including switches, routers and bridges, which allow for data to be routed and moved in networks. More specifically, the present invention provides an optimal method of storing and processing the information required to forward multicast packets from network devices.

### DESCRIPTION OF RELATED ART

In computer networks, each element of the network performs functions that allow for the network as a whole to perform the tasks required of the network. One such type of element used in computer networks is referred to, generally, as a switch. Switches, as they relate to computer networking and to Ethernet, are hardware-based devices which control the flow of data packets or cells based upon destination address information which is available in each packet. A properly designed and implemented switch should be capable of receiving a packet and switching the packet to an appropriate output port at what is referred to wirespeed or linespeed, which is the maximum speed capability of the particular network.

Basic Ethernet wirespeed is up to 10 megabits per second, and Fast Ethernet is up to 100 megabits per second. The newest Ethernet is referred to as 10 gigabit Ethernet, and is capable of transmitting data over a network at a rate of up to 10,000 megabits per second. As speed has increased, design constraints and design requirements have become more and more complex with respect to following appropriate design and protocol rules and providing a low cost, commercially viable solution.

This is especially true as network devices become more ubiquitous and the need to create less costly and more efficient network devices has become more important. One such problem occurs when a switch receives a data packet that has to be replicated so that the packet can be forwarded to multiple destinations. When a switch receives a packet, the packet is examined to determine the packet type. The type of packet determines which tables are accessed to determine a destination port for that packet. Packets can be unicast, multicast and broadcast. A broadcast packet is sent to all output ports and a unicast packet is sent to a single destination address. Multicast packets have multiple destinations and must be replicated such that a copy of the packet can be sent to each of the multiple destinations.

The international patent application published under the international publication number WO 01/41364 A2 teaches a method and apparatus for wire speed IP multicast forwarding from IP Multicast data packets to express port of a networking switch, which includes the steps of receiving an IP Multicast data packet at an ingress port of a networking switch. The received IP Multicast data packet is stored in a memory and a data packet processing logic forwards a portion of the header of the IP Multicast data packet to an ingress Multicast forwarding logic. The ingress Multicast forwarding logic determines the egress ports to which a copy of the IP Multicast data packet is to be forwarded and generates a multicast forward vector for the IP Multicast data packet, wherein the Multicast forward vector indicates to which port the stored IP Multicast data packet is to be forwarded.

Also the US Patent application publication US 2002/0009083, the US Patent 6,128,654 and the US Patent 6,147,995 disclose different methods to produce copies of multicast packets, wherein the headers of an incoming data packet are investigated and different look up tables are used to find the egress ports, where copies of the incoming packet are forwarded to.
The existing methodologies to produce copies of the packets are redundant and expensive from the standpoint of memory and central processing unit (CPU) usage.

As such, there is a need in the prior art for an efficient method and means for forwarding multicast data between interconnected network devices. In addition, there is a need for a method that allows for efficient replication of Internet Protocol (IP) multicast packets. Such a standard would need to be compatible with the existing hardware and reduce the use of the external CPU management to maintain the necessary throughput of the network device.

### SUMMARY OF THE INVENTION

It is an object of this invention to overcome the drawbacks of the above-described conventional network devices and methods. The present invention provides for a new method and apparatus for storing and processing the information required to forward IP multicast packets from network devices.

According to one aspect of this invention, a method of controlling data flow in a network device is discussed. An incoming data packet is received and an IP multicast group number is determined from the incoming data packet. An IP multicast group vector is determined from an. IP multicast group vector table using the IP multicast group number. That IP multicast group vector is then used to obtain at least one VLAN IDs from a VLAN ID table corresponding to bit positions defined by the IP multicast group vector. The data packet is then replicated and forwarded onto each VLAN ID of the at least one of VLAN IDs.

Alternatively, the method can include determining an incoming VLAN ID for the data packet and then determining whether the incoming VLAN ID is the same as one VLAN ID of the at least one obtained of VLAN IDs. When the incoming VLAN ID is the same as one VLAN ID, the data packet is forwarded for the one VLAN ID based on Level 2 values of the data packet. Also, an IP time to live value can be decremented and an IP checksum may be recalculated when a copy of the data packet is forwarded onto each VLAN ID. In addition, the source address value in the data packet may be replaced with an IP multicast router MAC address when a copy of the data packet is forwarded onto each VLAN ID. Also, when the egress port is a tagged port, the data packet may be tagged with the VLAN ID.

According to another aspect of this invention, a network device for controlling data flow in the device is also disclosed. The device includes a buffer configured to receive an incoming data packet and a buffer access device configured to determine an IP multicast group number from the incoming data packet. The device includes a table access device configured to obtain an IP multicast group vector from an. IP multicast group vector table using the IP multicast group number and a table access device configured to obtain a series of VLAN IDs from a VLAN ID table corresponding to bit positions defined by the IP multicast group vector. The device also includes a replicator configured to replicate the data packet based on the series of VLAN IDs and a forwarding device configured to forward the data packet onto each VLAN ID of the series of VLAN IDs.

These and other objects of the present invention will be described in or be apparent from the following description of the preferred embodiments.

### BRIEF DESCRIPTION OF THE DRAWINGS

For the present invention to be easily understood and readily practiced, preferred embodiments will now be described, for purposes of illustration and not limitation, in conjunction with the following figures:

Fig. 1 is a general block diagram of a network device and associated modules for use with the present invention;

Fig. 2 is a general block diagram illustrating the forwarding of a multicast packet from a switch; and

Fig. 3 is a flowchart illustrating the processes performed, according to one embodiment of the present invention.

### DETAILED DESCRIPTION OF PREFERRED EMBODIMENTS

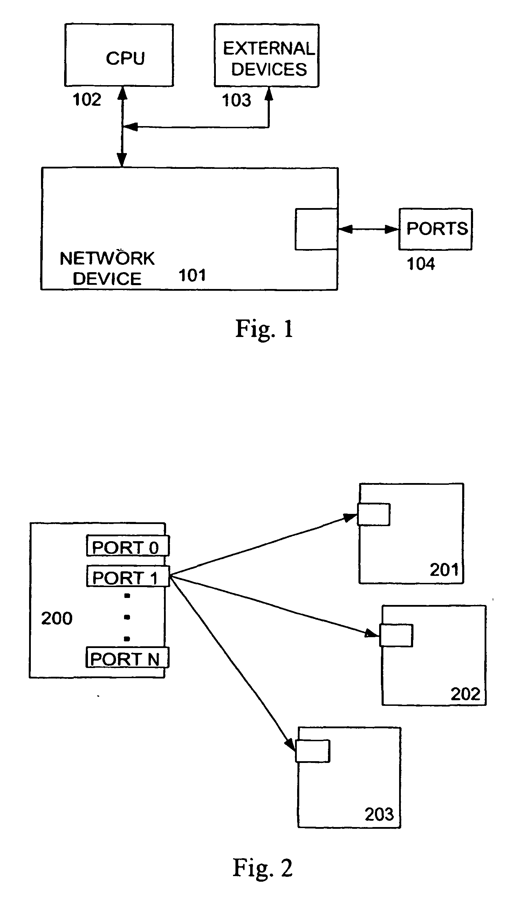

Fig. 1 illustrates a configuration of a node of the network, in accordance with the present invention, is illustrated. The network device 101 is connected to a Central Processing Unit (CPU) 102 and other external devices 103. The CPU can be used as necessary to program the network device 101 with rules that are appropriate to control packet processing. Ideally, the network device 101 should be able to process data received through physical ports 104 with only minimal interaction with the CPU and operate, as much as possible, in a free running manner.

Fig. 2 illustrates the logical process of forwarding a multicast packet. The initial network device 200 receives a multicast packet and processes that packet. Such processing can include classifying the packet, modifying the packet and changing the packet forwarding behavior. The processing can also include mirroring the packet to some other port, sending the packet to a certain class of service priority queue or changing the type of service. Egress port 1, in the illustrated example, replicates the packet so that it can forward the packet to each of the destination network devices 201, 202 and 203. The network devices that receive a copy of the packet are determined by data contained in the packet, as described below.

IP multicast replication requires packets from a source port in a network device to be replicated and forwarded on to ports of the device on which members of the IP multicast group exist. For large amounts of data, IP Multicast is more efficient than normal Internet transmissions because the server can forward a message to many recipients simultaneously. Unlike traditional Internet traffic that requires separate connections for each source-destination pair, IP Multicasting allows many recipients to share the same source. This means that just one set of packets is transmitted for all the destinations. The IP multicast group is the set of ports listed as belonging to a particular IP multicast group number.

The packets may be switched, bridged or routed based on the destination IP address. In particular, when multiple destinations for the packet reside on the same output port, the packet will need to be replicated on the same port as many times as the number of broadcast domains Virtual Local Area Networks (VLANs) present on the output port. A VLAN is a network of computers that behave as if they are connected to the same wire even though they may actually be physically located on different segments of a local area network. VLANs are usually configured through software rather than hardware, which makes them extremely flexible. One of the biggest advantages of VLANs is that when a computer is physically moved to another location, it can stay on the same VLAN without any hardware reconfiguration.

An existing implementation for replication of IP multicast packets over 32 VLANs, for example, stores the following information at each egress port:

**Table 1**

| Index = IP Multicast Group number | Count (5 bits) | VLAN ID #1 (12 bits) | VLAN ID #2 (12 bits) | ... | VLAN ID #32 (12 bits) |
|---|---|---|---|---|---|
| 0 | 2 | 1 | 15 | | 300 |
| 1 | 15 | 2 | 1 | | 45 |
| 2 | 32 | 23 | 4 | | 44 |
| ... | | | | | |

In Table 1 the entries are indexed by the IP multicast group number. Each entry contains a list of the VLAN IDs that are 12 bit quantities. The VLAN IDs are inserted into the VLAN tag of the tagged Ethernet frames that are sent out over the egress port on the VLANs represented by each VLAN ID. The IEEE 802.1q specification for "tagging" frames defines a method for coordinating VLANs across multiple switches. In the specification, an additional "tag" header is inserted in a frame after the source MAC address and before the frame type. By coordinating VLAN IDs across multiple switches, VLANs can be extended to multiple switches. Additionally, the Count field of Table 1 indicates how many entries in the VLAN ID list are valid.

When an IP multicast packet is to be sent out on an egress Ethernet port, the IP multicast replication table is indexed by the IP multicast group number and the packet is replicated and forwarded on each VLAN in the VLAN ID list, up to Count number of VLANs. If the number of IP multicast groups supported is 512 and the number of VLANs per port is 32, the memory size required in each egress port equals 199168 bits.

The existing implementation stores the information required for IP multicast in a redundant and expensive way. Also, keeping the VLAN IDs sorted in the table adds significant overhead to the management CPU.

According to the present invention, an optimal method of storing and processing the information required to replicate IP multicast packets is described. Compared to the existing method, described above, this proposal reduces the memory required by a factor often.

According to one embodiment of the present invention, two tables are stored in each egress Ethernet port, examples of which are:

**Table 2**

| Index = IPMG# | Bit Vector | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|
| 0 | | 1 0 | 1 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 0 | 1 | 0 |
| 1 | | 0 | 0 | 0 | 0 | 0 | 0 | 0 | 0 | 0 | 0 | 0 | 0 | 0 | 0 | 1 | 1 | 1 | 0 | 0 | 0 | 0 | 0 | 0 | 0 | 0 | 0 | 0 | 0 | 1 | 1 | 0 |
| 2 | | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| ... | | | | | | | | | | | | | | | | | | | | | | | | | | | | | | | | |

**Table 3**

| Index = IPMG # | VLAN ID (12 bits) |
|---|---|
| 0 | 300 |
| 1 | 44 |
| 2 | 21 |
| ... | |

An IP multicast packet arriving at the egress port is forwarded according to the following steps. First, the IP multicast group number is used to index into the IP multicast group vector table. Each pit position in this table is the index into the IP multicast VLAN ID table. The VLAN ID table stores the VLAN IDs corresponding to each bit position in the IP multicast group vector table entry. Next, the packet is replicated and forwarded onto each VLAN ID in the IP multicast VLAN ID table, for which a bit is set to "1" in the IP multicast group vector table. If the incoming VLAN ID of the packet is the same as the VLAN ID from the VLAN ID table, the packet is L2 forwarded, i.e. forwarded according to Layer 2 values of the packet.

If the incoming VLAN ID of the packet is different, the packet is routed on to the outgoing VLAN. The IP TTL is decremented and the IP checksum is recalculated. The Source Address (SA) of the packet is replaced with the IP multicast router Media Access Controller (MAC) address). If the egress port is a tagged port, the packet is tagged with the appropriate VLAN ID. Else the packet is forwarded as an untagged packet.

For a 512 group IP multicast implementation, assuming a requirement to replicate over 32 VLANs on an egress port, the memory requirement using this method is 16768 bits. This is less by a factor greater than ten compared to the existing implementation.

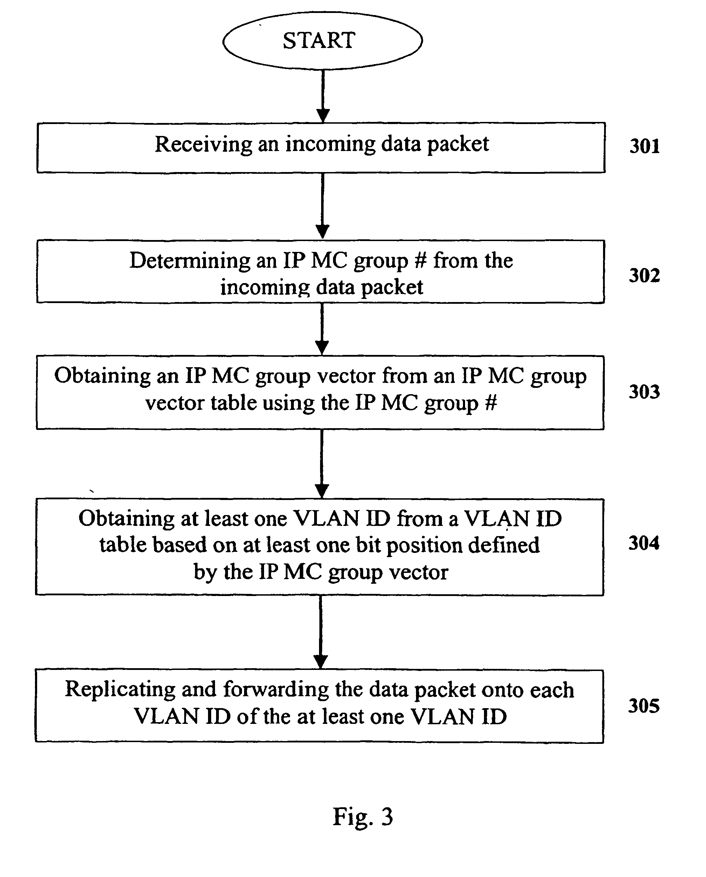

The general process of IP multicasting, according to one embodiment of the present invention, is illustrated in Fig. 3. In step 301, an incoming data packet is received and an IP multicast group number is determined from the incoming data packet, in step 302. An IP multicast group vector is obtained from an IP multicast group vector table using the IP multicast group number, in step 303. At least one VLAN ID is obtained from a VLAN ID table based on at least one bit position defined by the IP multicast group vector, in step 304. In step 305, the data packet is replicated and forwarded onto each VLAN ID of the at least one VLAN ID.

Thus, the optimal IP multicast replication mechanism that has been described, according to one embodiment of the present invention, reduces the memory requirement compared to existing methods by a factor of ten and allows ease of configuration by a management CPU.

In addition, while the term packet has been used in the description of the present invention, the invention has import to many types of network data. For purposes of this invention, the term packet includes packet, cell, frame, datagram, bridge protocol data unit packet, and packet data.

The above-discussed configuration of the invention is, in one embodiment, embodied on a semiconductor substrate, such as silicon, with appropriate semiconductor manufacturing techniques and based upon a circuit layout which would, based upon the embodiments discussed above, be apparent to those skilled in the art. A person of skill in the art with respect to semiconductor design and manufacturing would be able to implement the various modules, interfaces, and components, etc. of the present invention onto a single semiconductor substrate, based upon the architectural description discussed above. It would also be within the scope of the invention to implement the disclosed elements of the invention in discrete electronic components, thereby taking advantage of the functional aspects of the invention without maximizing the advantages through the use of a single semiconductor substrate.

Although the invention has been described based upon these preferred embodiments, it would be apparent to those of skilled in the art that certain modifications, variations, and alternative constructions would be apparent, while remaining within the scope of the invention. In order to determine the metes and bounds of the invention, therefore, reference should be made to the appended claims.

## Claims

1. A method of controlling data flow in a network device (**101**), said method comprising:
receiving an incoming data packet (301);
determining an IP multicast group number from said incoming data packet (302); **characterized in that** the method comprising the further steps of
obtaining an IP multicast group vector from an IP multicast group vector table using said IP multicast group number (303);
obtaining at least one virtual local area network identifier from a virtual local area network identifier table corresponding to at least one bit position defined by the IP multicast group vector (304); and
replicating and forwarding said data packet onto each virtual local area network identifier of said at least one virtual local area network identifier (305).

2. A method as recited in claim 1, further comprising:
determining an incoming virtual local area network identifier for said data packet;
determining whether said incoming virtual local area network identifier is the same as one virtual local area network identifier of said at least one obtained virtual local area network identifier; and
forwarding the data packet for said one virtual local area network identifier based on Level 2 values of said data packet when said incoming virtual local area network identifiers is the same as one virtual local area network identifier.

3. A method as recited in claim 1, further comprising:
decrementing an IP time to live value and recalculating an IP checksum when a copy of the data packet is forwarded onto each virtual local area network identifier.

4. A method as recited in claim 1, further comprising:
replacing a source address value in said data packet with an IP multicast router MAC address when a copy of the data packet is forwarded onto each virtual local area network identifier.

5. A method as recited in claim 1, further comprising:
tagging said data packet with said each virtual local area network identifier when an egress port through which the replicated data packet is forwarded is a tagged port.

6. A network device for controlling data flow in said device (**101**) comprising:
a buffer configured to receive an incoming data packet;
a buffer access device configured to determine an IP multicast group number from said incoming data packet;
**characterized in that** the network device further comprises:
a table access device configured to obtain an IP multicast group vector from an. IP multicast group vector table using said IP multicast group number;
a table access device configured to obtain a at least one virtual local area network identifier from a virtual local area network identifier table corresponding to bit positions defined by the IP multicast group vector; and
a replicator configured to replicate said data packet based on said at least one virtual local area network identifier; and
a forwarding device configured to forward said data packet onto each virtual local area network identifier of said at least one virtual local area network identifier.

7. A network device as recited in claim **6**, further comprising:
a buffer access device configured to determine an incoming virtual local area network identifier for said data packet;
a comparator configured to determine whether said incoming virtual local area network identifier is the same as one virtual local area network identifier of said at least one virtual local area network identifier obtained by said table access device; and
a forwarding device configured to forward the data packet for said one virtual local area network identifier based on Level 2 values of said data packet when said incoming virtual local area network identifier is the same as one virtual local area network identifier.

8. A network device as recited in claim **6**, further comprising:
a counter configured to decrement an IP time to live value; and
a calculator configured to recalculate an IP checksum when a copy of the data packet is forwarded onto each virtual local area network identifier.

9. A network device as recited in claim **6**, further comprising:
a buffer access device configured to replace a source address value in said data packet with an IP multicast router MAC address when a copy of the data packet is forwarded onto each virtual local area network identifier.

10. A network device as recited in claim **6**, further comprising:
a buffer access device configured to tag said data packet with said each virtual local area network identifier when an egress port through which the replicated data packet is forwarded is a tagged port.

11. A network device as recited in claim **6**, wherein said network device **(101)** comprises a network switch.

12. A network device as recited in claim **6**, wherein said network device **(101)** comprises a network router.

13. A network device as recited in claim **6**, wherein said network device **(101)** comprises a network repeater.

## Patentansprüche

1. Verfahren zum Steuern des Datenstromes in einer Netzwerkvorrichtung (101), wobei das Verfahren umfasst:
das Empfangen eines ankommenden Datenpakets (301),
das Bestimmen einer IP-Multicast-Gruppennummer aus dem ankommenden Datenpaket (302),
**dadurch gekennzeichnet, dass** das Verfahren die weiteren Schritte umfasst:
das Erhalten eines IP-Multicast-Gruppenvektors aus einer IP-Multicast-Gruppenvektortabelle unter Verwendung der IP-Multicast-Gruppennummer (303),
das Erhalten wenigstens einer virtuellen lokalen Netzkennung aus einer virtuellen lokalen Netzkennungstabelle, die wenigstens einer Bitposition entspricht, die durch den IP-Multicast-Gruppenvektor (304) definiert wird, und
das Replizieren und Forwarding (Übermitteln) des Datenpakets an jede virtuelle lokale Netzkennung der wenigstens einen virtuellen lokalen Netzkennung (305).

2. Verfahren nach Anspruch 1, das ferner umfasst:
das Bestimmen einer ankommenden virtuellen lokalen Netzkennung für das Datenpaket,
das Bestimmen, ob die ankommende virtuelle lokale Netzkennung einer virtuellen lokalen Netzkennung der wenigstens einen erhaltenen virtuellen lokalen Netzkennung entspricht, und
das Forwarding des Datenpakets für die eine virtuelle lokale Netzkennung basierend auf Level-2-Werten des Datenpakets, wenn die ankommende virtuelle lokale Netzkennung einer virtuellen lokalen Netzkennung entspricht.

3. Verfahren nach Anspruch 1, das ferner umfasst:
das Dekrementieren eines IP-Time-To-Live-Wertes und das Neuberechnen einer IP-Prüfsumme, wenn eine Kopie des Datenpakets an jede virtuelle lokale Netzkennung übermittelt wird.

4. Verfahren nach Anspruch 1, das ferner umfasst:
das Ersetzen eines Quellenadressenwerts in dem Datenpaket durch eine IP-Multicast-Router-MAC-Adresse, wenn eine Kopie des Datenpakets an jede virtuelle lokale Netzkennung übermittelt wird.

5. Verfahren nach Anspruch 1, das ferner umfasst:
das Tagging des Datenpakets mit jeder virtuellen lokalen Netzkennung, wenn ein Egress-Port, durch den das replizierte Datenpaket übermittelt wird, ein getaggter Port ist.

6. Netzwerkvorrichtung zum Steuern des Datenstromes in der Vorrichtung (101) mit:
einem Puffer, der dafür konfiguriert ist, ein ankommendes Datenpaket zu empfangen,
einer Pufferzugriffseinrichtung, die dafür konfiguriert ist, eine IP-Multicast-Gruppennummer aus dem ankommenden Datenpaket zu bestimmen,
**dadurch gekennzeichnet, dass** die Netzwerkvorrichtung ferner umfasst:
eine Tabellenzugriffseinrichtung, die dafür konfiguriert ist, einen IP-Multicast-Gruppenvektor aus einer IP-Multicast-Gruppenvektortabelle unter Verwendung der IP-Multicast-Gruppennummer zu erhalten,
eine Tabellenzugriffseinrichtung, die dafür konfiguriert ist, wenigstens eine virtuelle lokale Netzkennung aus einer virtuellen lokalen Netzkennungstabelle zu erhalten, die den durch den IP-Multicast-Gruppenvektor definierten Bitpositionen entspricht, und
einen Replikator, der dafür konfiguriert ist, das Datenpaket basierend auf der wenigstens einen virtuellen lokalen Netzkennung zu replizieren, und
eine Forwarding-Einrichtung, die dafür konfiguriert ist, das Datenpaket an jede virtuelle lokale Netzkennung der wenigstens einen virtuellen lokalen Netzkennung zu übermitteln.

7. Netzwerkvorrichtung nach Anspruch 6, die ferner umfasst:
eine Pufferzugriffseinrichtung, die dafür konfiguriert ist, eine ankommende virtuelle lokale Netzkennung für das Datenpaket zu bestimmen,
einen Vergleicher, der dafür konfiguriert ist, zu bestimmen, ob die ankommende virtuelle lokale Netzkennung einer virtuellen lokalen Netzkennung der wenigstens einen virtuellen lokalen Netzkennung entspricht, die durch die Tabellenzugriffseinrichtung erhalten wurde, und
eine Forwarding-Einrichtung, die dafür konfiguriert ist, das Datenpaket für die eine virtuelle lokale Netzkennung basierend auf Level-2-Werten des Datenpakets zu übermitteln, wenn die ankommende virtuelle lokale Netzkennung einer virtuellen lokalen Netzkennung entspricht.

8. Netzwerkvorrichtung nach Anspruch 6, die ferner umfasst:
einen Zähler, der dafür konfiguriert ist, einen IP-Time-to-Live-Wert zu dekrementieren, und
eine Recheneinrichtung, die dafür konfiguriert ist, eine IP-Prüfsumme neu zu berechnen, wenn eine Kopie des Datenpakets an jede virtuelle lokale Netzkennung übermittelt wird.

9. Netzwerkvorrichtung nach Anspruch 6, die ferner umfasst:
eine Pufferzugriffseinrichtung, die dafür konfiguriert ist, einen Quellenadressenwert in dem Datenpaket durch eine IP-Multicast-Router-MAC-Adresse zu ersetzen, wenn eine Kopie des Datenpakets an jede virtuelle lokale Netzkennung übermittelt wird.

10. Netzwerkvorrichtung nach Anspruch 6, die ferner umfasst:
eine Pufferzugriffseinrichtung, die dafür konfiguriert ist, das Datenpaket mit jeder virtuellen lokalen Netzkennung zu taggen, wenn ein Egress-Port, durch den das replizierte Datenpaket übermittelt wird, ein getaggter Port ist.

11. Netzwerkvorrichtung nach Anspruch 6, wobei die Netzwerkvorrichtung (101) einen Netzwerk-Switch umfasst.

12. Netzwerkvorrichtung nach Anspruch 6, wobei die Netzwerkvorrichtung (101) einen Netzwerk-Router umfasst.

13. Netzwerkvorrichtung nach Anspruch 6, wobei die Netzwerkvorrichtung (101) einen Netzwerk-Repeater umfasst.

## Revendications

1. Procédé de contrôle du flux de données dans un dispositif de réseau (101), ledit procédé comprenant :
la réception d'un paquet de données entrant (301) ;
la détermination d'un numéro de groupe de multidiffusion IP à partir dudit paquet de données entrant (302) ;
**caractérisé en ce que** le procédé comprend les étapes supplémentaires consistant à
obtenir un vecteur de groupe de multidiffusion IP à partir d'une table de vecteurs de groupe de multidiffusion IP en utilisant ledit numéro de groupe de multidiffusion IP (303) ;
obtenir au moins un identificateur de réseau local virtuel à partir d'une table d'identificateurs de réseau local virtuel correspondant à au moins une position de bit définie par le vecteur de groupe de multidiffusion IP (304) ; et
répliquer et transférer ledit paquet de données sur chaque identificateur de réseau local virtuel dudit au moins un identificateur de réseau local virtuel (305).

2. Procédé selon la revendication 1, comprenant en outre :
la détermination d'un identificateur de réseau local virtuel entrant pour ledit paquet de données ;
la détermination de si ledit identificateur de réseau local virtuel entrant est le même qu'un identificateur de réseau local virtuel dudit au moins un identificateur de réseau local virtuel obtenu ; et
le transfert du paquet de données pour ledit un identificateur de réseau local virtuel sur la base des valeurs de niveau 2 dudit paquet de données lorsque ledit identificateur de réseau local virtuel entrant est le même qu'un identificateur de réseau local virtuel.

3. Procédé selon la revendication 1, comprenant en outre :
la décrémentation d'une valeur de durée de vie IP et le recalcul d'une somme de contrôle IP lorsqu'une copie du paquet de données est transférée sur chaque identificateur de réseau local virtuel.

4. Procédé selon la revendication 1, comprenant en outre :
le remplacement d'une valeur d'adresse source dans ledit paquet de données par une adresse MAC de routeur de multidiffusion IP lorsqu'une copie du paquet de données est transférée sur chaque identificateur de réseau local virtuel.

5. Procédé selon la revendication 1, comprenant en outre :
l'étiquetage dudit paquet de données avec ledit chaque identificateur de réseau local virtuel lorsqu'un port de sortie par l'intermédiaire duquel le paquet de données répliqué est transféré est un port étiqueté.

6. Dispositif de réseau pour contrôler le flux de données dans ledit dispositif (101) comprenant :
un tampon configuré pour recevoir un paquet de données entrant ;
un dispositif d'accès au tampon configuré pour déterminer un numéro de groupe de multidiffusion IP à partir dudit paquet de données entrant ;
**caractérisé en ce que** ledit dispositif de réseau comprend en outre :
un dispositif d'accès à la table configuré pour obtenir un vecteur de groupe de multidiffusion IP à partir d'une table de vecteurs de groupe de multidiffusion IP en utilisant ledit numéro de groupe de multidiffusion IP ;
un dispositif d'accès à la table configuré pour obtenir au moins un identificateur de réseau local virtuel à partir d'une table d'identificateurs de réseau local virtuel correspondant aux positions de bits définies par le vecteur de groupe de multidiffusion IP ; et
un réplicateur configuré pour répliquer ledit paquet de données sur la base dudit au moins un identificateur de réseau local virtuel ; et
un dispositif de transfert configuré pour transférer ledit paquet de données sur chaque identificateur de réseau local virtuel dudit au moins un identificateur de réseau local virtuel.

7. Dispositif de réseau selon la revendication 6, comprenant en outre :
un dispositif d'accès au tampon configuré pour déterminer un identificateur de réseau local virtuel entrant pour ledit paquet de données ;
un comparateur configuré pour déterminer si ledit identificateur de réseau local virtuel entrant est le même qu'un identificateur de réseau local virtuel dudit au moins un identificateur de réseau local virtuel obtenu par ledit dispositif d'accès à la table ; et
un dispositif de transfert configuré pour transférer le paquet de données pour ledit un identificateur de réseau local virtuel sur la base des valeurs de niveau 2 dudit paquet de données lorsque ledit identificateur de réseau local virtuel entrant est le même qu'un identificateur de réseau local virtuel.

8. Dispositif de réseau selon la revendication 6, comprenant en outre :
un compteur configuré pour décrémenter une valeur de durée de vie IP ; et
un calculateur configuré pour recalculer une somme de contrôle IP lorsqu'une copie du paquet de données est transférée sur chaque identificateur de réseau local virtuel.

9. Dispositif de réseau selon la revendication 6, comprenant en outre :
un dispositif d'accès au tampon configuré pour remplacer une valeur d'adresse source dans ledit paquet de données par une adresse MAC de routeur de multidiffusion IP lorsqu'une copie du paquet de données est transférée sur chaque identificateur de réseau local virtuel.

10. Dispositif de réseau selon la revendication 6, comprenant en outre :
un dispositif d'accès au tampon configuré pour étiqueter ledit paquet de données avec ledit chaque identificateur de réseau local virtuel lorsqu'un port de sortie par l'intermédiaire duquel le paquet de données répliqué est transféré est un port étiqueté.

11. Dispositif de réseau selon la revendication 6, dans lequel ledit dispositif de réseau (101) comprend un commutateur de réseau.

12. Dispositif de réseau selon la revendication 6, dans lequel ledit dispositif de réseau (101) comprend un routeur de réseau.

13. Dispositif de réseau selon la revendication 6, dans lequel ledit dispositif de réseau (101) comprend un répéteur de réseau.
